# EUROPEAN PATENT APPLICATION

(11) **EP 4 354 636 A1**
(43) Date of publication of application: **17.04.2024**
(21) Application number: 22900314.0
(22) Date of filing: 21.11.2022
(51) Int. Cl.: H01M 50/51, H01M 50/531, H01M 10/04

(54) **BATTERY CELL AND BATTERY PACK**

(30) Priority: 01.12.2021 CN 202122992772 U
(71) Applicant: Contemporary Amperex Technology Co., Limited, Ningde, Fujian 352100 (CN)
(72) Inventor: XIAO, Haihe, Ningde, Fujian 352100 (CN); ZHANG, Xiaowen, Ningde, Fujian 352100 (CN); LI, Baiqing, Ningde, Fujian 352100 (CN); HUANG, Yaping, Ningde, Fujian 352100 (CN); PENG, Shuangjuan, Ningde, Fujian 352100 (CN); JIN, Haizu, Ningde, Fujian 352100 (CN)
(74) Representative: Ran, Handong
(86) International application number: PCT/CN2022/133333
(87) International publication number: WO 2023/098509

(57) **Abstract**

Disclosed in the present application are a battery cell and a battery pack. The battery cell comprises a shell and a bare cell, which is located in an inner cavity of the shell, wherein the bare cell at least has two opposite extension ends and a middle region, which is located between the two opposite extension ends of the bare cell; and the two opposite extension ends of the bare cell are configured to be lower than the middle region of the bare cell in a height direction. Since the bare cell of the battery cell forms a structure in which the middle is high and the edge is low, an electrolyte level in the shell is located below the middle region of the bare cell and above the extension ends thereof, such that an electrolyte for being drawn into a gap between electrode sheets can be provided while a space for accommodating gas is reserved in the shell, so as to reduce the probability of lithium precipitation, thereby ensuring the performance of a battery.

## Description

This application claims priority to Chinese Patent Application No. 202122992772.6, filed on December 1, 2021 and entitled "BATTERY CELL AND BATTERY PACK", which is incorporated herein by reference in its entirety.

### TECHNICAL FIELD

This application relates to the technical field of battery production, and in particular, to a battery cell and a battery pack.

### BACKGROUND

With the progress of modern society and people's increasing consciousness of environmental protection, more devices such as mobile phones, laptops, electric tools, electric vehicles, and energy storage stations are powered by rechargeable secondary batteries, thereby providing a broad space for the application and development of the rechargeable secondary batteries.

The devices such as electric vehicles and energy storage stations generally require high-capacity power batteries as power sources. Such power batteries require not only a high capacity, but also high safety to fulfill the operation standards and people's requirements.

A battery includes at least one battery cell. The battery cell includes a housing and a bare cell packaged in the housing. A negative electrode post on the housing is configured to connect an external circuit and a negative electrode plate on the bare cell. A positive electrode post on the housing is configured to connect an external circuit and a negative tab on the bare cell. An injection port is further created on the housing to facilitate injection of an electrolyte solution into the housing.

During charging and discharging of the battery, due to the transfer of lithium ions between the negative electrode plate and the positive electrode plate of the bare cell, the two electrode plates shrink to varying degrees. Especially, the negative electrode plate shrinks to a greater degree, thereby extruding the electrolyte solution located between the two electrode plates or drawing the electrolyte solution in the housing into a gap between the two electrode plates. Consequently, the battery performance is impaired under specified operating conditions, especially during discharging of the battery.

### SUMMARY OF THE INVENTION

### Technical Problems

To solve the problem of lithium plating caused by inability to draw an electrolyte solution into a gap between electrode plates of a bare cell during discharging of a battery, one aspect of this application provides a battery cell to reduce the probability of lithium plating and ensure high performance of the battery.

### Technical Solutions

The battery cell in this application includes a housing and a bare cell located in an inner cavity of the housing. The bare cell includes at least two opposite extension ends and a middle region located between the two opposite extension ends of the bare cell. The two opposite extension ends of the bare cell are configured to be lower than the middle region of the bare cell in a height direction.

In an embodiment of a battery cell in this application, the bare cell includes a positive electrode plate, a separator, and a negative electrode plate. The positive electrode plate, the separator, and the negative electrode plate are stacked together in sequence. An edge position of the bare cell in a circumferential direction is configured to extend downward in the height direction.

Edges of the battery body in the circumferential direction are immersed in an electrolyte solution. During discharging of the battery, the positive electrode plate and the negative electrode plate can draw the electrolyte solution into the gap between the two electrode plates through the edges.

In an embodiment of a battery cell in this application, the bare cell includes a positive electrode plate, a separator, and a negative electrode plate. The positive electrode plate, the separator, and the negative electrode plate are wound together. Two ends in a direction perpendicular to a winding direction of the bare cell are the two extension ends.

During discharging of the battery, the positive electrode plate and the negative electrode plate can draw the electrolyte solution into the gap between the two electrode plates through the two extension ends.

In an embodiment of a battery cell in this application, the bare cell assumes an arc-shaped structure, and the housing assumes a shape that fits the bare cell.

The arc-shaped bare cell can avoid formation of a stress concentration region inside the bare cell, thereby improving the ability of the bare cell to withstand external forces while ensuring longevity of the bare cell. Moreover, the housing matches the bare cell in shape, and the bare cell can make full use of the inner cavity space of the housing, thereby ensuring structural compactness of the battery cell. More battery cells can be accommodated per unit volume of the battery pack, thereby improving the energy storage capacity of the battery pack.

In an embodiment of this application, at least two bare cells are disposed. The at least two bare cells are connected in parallel in the housing.

In an embodiment of this application, the housing is suitable for accommodating two or more bare cells. When at least two bare cells are connected in parallel in the housing, the current of the entire battery cell can be increased, and the performance of the battery cell can be improved.

In an embodiment of a battery cell in this application, the bare cell further includes a positive tab and a negative tab. The positive tab and the negative tab are located at the two opposite extension ends of the bare cell respectively or located at a same extension end of the bare cell.

The positive tab is configured to electrically connect the positive electrode plate and a positive electrode post on the housing. The negative tab is configured to electrically connect the negative electrode plate and an negative electrode post on the housing. The positive electrode post and the negative electrode post are configured to be electrically connected to an external circuit to form a current loop. When the positive and negative electrode plates react chemically with the electrolyte solution, a current flows through the current loop.

In an embodiment of a battery cell in this application, an electrolyte solution is disposed in the housing. At least two opposite extension ends of the bare cell are configured to be always immersed in the electrolyte solution.

The extension ends of the bare cell are always immersed in the electrolyte solution, thereby providing a sufficient amount of electrolyte solution for being drawn into the gap between the electrode plates, and in turn, reducing the probability of lithium plating and ensuring high performance of the battery.

Another aspect of this application further provides a battery pack, including at least two battery cells described above and two constraint portions that fit shapes of the battery cells. The at least two battery cells are stacked together in the height direction and are constrained between the two constraint portions.

The battery pack includes at least two battery cells between the two constraint portions. The number of battery cells may be set based on the power demand of the electrical device, and at least the minimum power demand can be satisfied.

In an embodiment of the battery pack in this application, among the at least two battery cells stacked in the height direction, a positive electrode post of one of two adjacent battery cells is connected to a negative electrode post of the other battery cell by a first current collecting plate, so as to connect the two adjacent battery cells in series.

A plurality of battery cells in the battery pack are connected in series by the first current collecting plates. From the battery pack, just a positive lead-out wire and a negative lead-out wire are led out, and then the positive lead-out wire and the negative lead-out wire are electrically connected to an external circuit. The overall structure is compact and simple.

In an embodiment of a battery pack in this application, the battery pack includes at least two battery cells described above and two constraint portions that fit shapes of the battery cells. The at least two battery cells are stacked together in a direction perpendicular to an extension direction of the battery cells, and are constrained between the two constraint portions.

This battery pack can make full use of the structure of the constraint portions to arrange more battery cells per unit volume.

In an embodiment of the battery pack in this application, among the at least two battery cells stacked in the direction perpendicular to the extension direction of the battery cells, a positive electrode post of one of two adjacent battery cells is connected to a negative electrode post of the other battery cell by a second current collecting plate, so as to connect the two adjacent battery cells in series.

A plurality of battery cells in the battery pack are connected in series by the second current collecting plates. From the battery pack, a positive lead-out wire and a negative lead-out wire are led out, and then the positive lead-out wire and the negative lead-out wire are electrically connected to an external circuit. The overall structure is compact and simple.

In an embodiment of the battery pack in this embodiment, the battery pack includes a plurality of battery cells described above and two constraint portions that fit shapes of the battery cells. At least two battery cells are stacked together in a direction perpendicular to an extension direction of the battery cells. At least two battery cells are stacked together in the height direction. The plurality of battery cells are constrained between the two constraint portions.

This battery pack can make full use of the structure of the constraint portions to arrange more battery cells per unit volume.

In an embodiment of the battery pack in this application, among the at least two battery cells stacked in the height direction, a positive electrode post of one of two adjacent battery cells is connected to a negative electrode post of the other battery cell by a first current collecting plate, so as to connect the two adjacent battery cells in series.

Among the at least two battery cells stacked in the direction perpendicular to the extension direction of the battery cells, a positive electrode post of one of two adjacent battery cells is connected to a negative electrode post of the other battery cell by a second current collecting plate, so as to connect the two adjacent battery cells in series.

A plurality of battery cells in the battery pack according to this application are connected in series by the first current collecting plate and the second current collecting plate. From the battery pack, a positive lead-out wire and a negative lead-out wire are led out, and then the positive lead-out wire and the negative lead-out wire are electrically connected to an external circuit. The overall structure is compact and simple.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### Beneficial Effects

The bare cell of this cell forms a structure that is high in the middle and low at edges, and a liquid level height of an electrolyte solution in the housing is below the middle region of the bare cell and above extension ends. In this way, the electrolyte solution is drawn into a gap between the electrode plates while a space for accommodating gas is reserved in the housing, thereby reducing the probability of lithium plating and ensuring high performance of the battery.

### BRIEF DESCRIPTION OF DRAWINGS

By reading the following detailed description of optional embodiments, a person of ordinary skill in the art becomes clearly aware of various other advantages and benefits. The drawings are merely intended to illustrate the optional embodiments, but not to limit this application. In all the drawings, the same reference numeral represents the same component. In the drawings:
FIG. 1 is a three-dimensional schematic structural diagram of a battery cell according to an embodiment of this application;
FIG. 2 to FIG. 4 are schematic structural diagrams of a battery cell in use from a front view, a top view, and a side view, respectively, according to an embodiment of this application;
FIG. 5 is a cross-sectional view of FIG. 3 sectioned along an A-A line;
FIG. 6 is a close-up view of a part I shown in FIG. 5;
FIG. 7 is a cross-sectional view of FIG. 3 sectioned along a B-B line;
FIG. 8 is a close-up view of a part II shown in FIG. 7;
FIG. 9 is a three-dimensional schematic structural diagram of a battery pack according to an embodiment of this application;
FIG. 10 to FIG. 13 are schematic structural diagrams of a battery pack in use from a front view, a top view, a left side view, and a right side view, respectively, according to an embodiment of this application;
FIG. 14 is a cross-sectional view of FIG. 11 sectioned along a C-C line; and
FIG. 15 is a cross-sectional view of FIG. 11 sectioned along a D-D line.

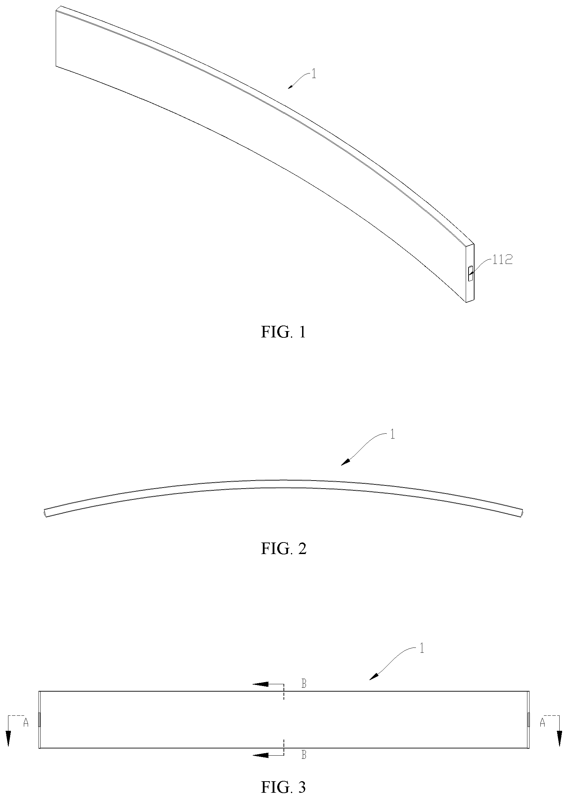

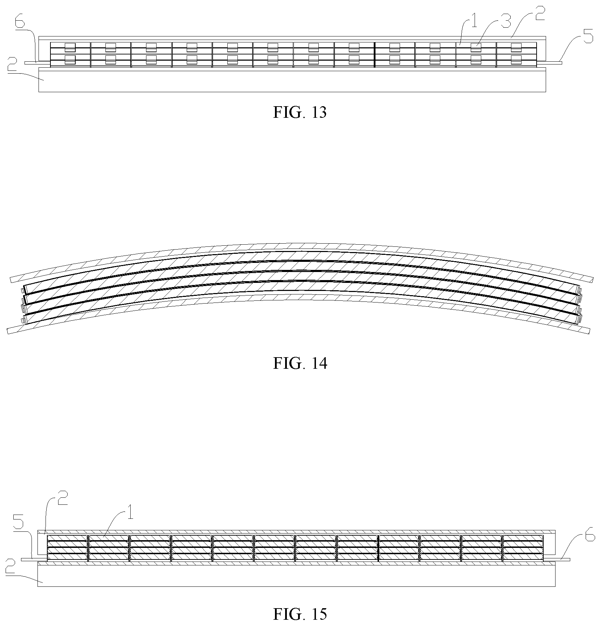

The one-to-one correspondences between names and reference numerals of components in FIG. 1 and FIG. 15 are as follows:
List of reference numerals: 1 battery cell, 10 housing, 100 housing body, 101 end cap, 11 bare cell, 110 positive tab, 112 positive electrode post, 2 constraint portion, 3 first current collecting plate, 4 second current collecting plate, 5 positive lead-out wire, 6 negative lead-out wire.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "a plurality of" means two or more (including two). Similarly, "a plurality of groups" means two or more groups (including two groups).

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

During charging and discharging of the battery, due to the transfer of lithium ions between the negative electrode plate and the positive electrode plate of the bare cell, the two electrode plates shrink to varying degrees. Especially, the negative electrode plate shrinks to a greater degree, thereby extruding the electrolyte solution located between the electrode plates or drawing the electrolyte solution in the housing into a gap between the electrode plates. Consequently, the battery performance is impaired under specified operating conditions, especially during discharging of the battery.

Specifically, during charging of a battery, lithium ions are deintercalated from a positive electrode plate of a bare cell and intercalated into a negative electrode plate, thereby causing the negative electrode plate to expand, and squeezing an electrolyte solution between the negative electrode plate and the positive electrode plate. Conversely, during discharging of the battery, lithium ions are deintercalated from the negative electrode plate of the bare cell and intercalated into the positive electrode plate, thereby causing the negative electrode plate and the positive electrode plate to shrink. The constraint force between the electrode plates is reduced, and the gap between the electrode plates becomes larger. Consequently, the electrolyte solution is drawn into the gap between the electrode plates.

To reserve a space for the gas generated by chemical reaction of the electrolyte solution, it is not advisable to fill the housing with the electrolyte solution. During discharging of the battery, there is a problem that one end of the bare cell is not immersed in the electrolyte solution. In this case, no electrolyte solution is available for being drawn into the gap between the electrode plates, or, the electrolyte solution is drawn into a part of the gap between the electrode plates but just a little or even no electrolyte solution is drawn into another part of the gap. Consequently, lithium plating occurs in the bare cell, thereby impairing the performance of the battery.

To solve the above problem, this application provides a battery cell to reduce the possibility of lithium plating in the bare cell, and in turn, ensure high performance of the battery.

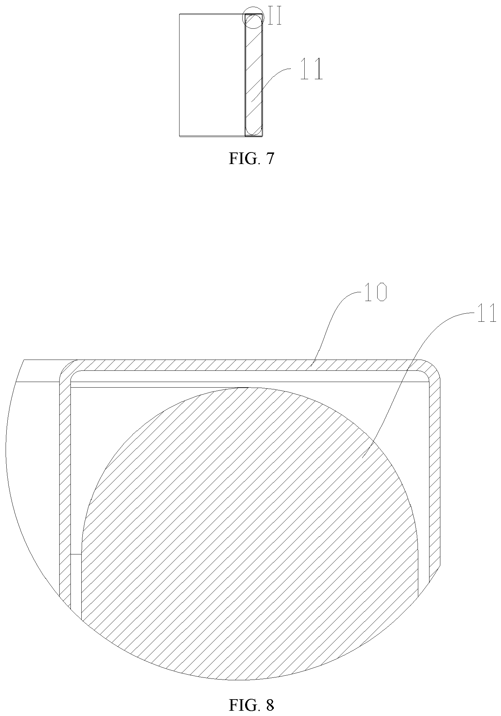

Referring to FIG. 1 to FIG. 8, according to some embodiments of this application, the battery cell in this application includes a housing 10 and a bare cell 11 located in an inner cavity of the housing. The bare cell 11 includes at least two opposite extension ends and a middle region located between the two opposite extension ends of the bare cell 11. The two opposite extension ends of the bare cell 11 are configured to be lower than the middle region of the bare cell in a height direction. The height direction means a thickness direction of the bare cell 11 when the battery is in use.

The bare cell 11 of this cell 1 forms a structure that is high in the middle and low at edges, and the liquid level height of the electrolyte solution in the housing 10 is below the middle region of the bare cell 11 and above extension ends. In this way, a space for accommodating gas is reserved in the housing 10, and at the same time, the two extension ends of the bare cell 11 are ensured to be always immersed in the electrolyte solution, thereby reducing the probability of lithium plating and ensuring high performance of the battery.

The housing 10 includes a housing body 100 and an end cap 101. The end cap 101 fits and covers an opening of the housing body 100 to isolate an internal environment of the battery cell 1 from components in an external environment.

Not restrictively, the shape of the end cap 101 may adapt to the shape of the housing body 100 to fit the housing. Optionally, the end cap 101 may be made of a material of appropriate hardness and strength (such as aluminum alloy), so that the end cap 101 is not prone to deform when squeezed or impacted. In this way, the battery cell 1 achieves higher structural strength and higher safety performance. Functional components such as a positive electrode post and a negative electrode post may be disposed on the end cap 101. The positive electrode post and the negative electrode post may be configured to be electrically connected to the bare cell 11 to output or input electrical energy of the battery cell 1.

In some embodiments, a pressure relief mechanism configured to release an internal pressure when the internal pressure or temperature of the battery cell 1 reaches a threshold may be further disposed on the end cap 101. The end cap 101 may also be made of a variety of materials such as copper, iron, aluminum, stainless steel, aluminum alloy, or plastic, without being particularly limited herein. In some embodiments, an insulation piece may be further disposed on an inner side of the end cap 101. The insulation piece may be configured to isolate an electrically connected component in the housing 10 from the end cap 101 to reduce short-circuit risks. For example, the insulator may be plastic, rubber, or the like.

The housing body 100 is a component configured to fit the end cap 101 to form an internal environment of the battery cell 1. The formed internal environment may be used to accommodate the bare cell 11, the electrolytic solution, and other components. The housing body 100 and the end cap 101 may be stand-alone components. An opening may be created on the housing body 100. At the opening, the end cap 101 fits and covers the opening to form the internal environment of the battery cell 1. Not restrictively, the end cap 101 and the housing body 100 may be integrated.. The housing 10 may be in various shapes and sizes, such as a cuboid, cylinder, or hexagonal prism. Specifically, the shape of the housing 10 may be determined depending on the specific shape and dimensions of the bare cell 11. The housing body may be made of a variety of materials such as copper, iron, aluminum, stainless steel, aluminum alloy, or plastic, and the material is not particularly limited herein.

The bare cell 11 is a component that reacts electrochemically in the battery cell 1.

According to an embodiment of this application, the bare cell 11 of this application includes a positive electrode plate (not shown in the drawing), a separator (not shown in the drawing), and a negative electrode plate (not shown in the drawing). The positive electrode plate, the separator, and the negative electrode plate are stacked together in sequence. An edge position of the bare cell 11 in a circumferential direction is configured to extend downward in the height direction.

A positive active material is disposed on the positive electrode plate, and a negative active material is disposed on the negative electrode plate. When the bare cell 11 touches the electrolyte solution, the positive active material and the negative active material react chemically with the electrolyte solution, and the positive electrode plate and the negative electrode plate are electrically connected to the positive electrode post 112 and the negative electrode post (not shown in the drawing) on the housing body 10 respectively to form a current loop.

The separator is made of an insulation material, and is disposed between the positive electrode plate and the negative electrode plate to serve an insulation purpose.

According to an embodiment of this application, the positive electrode plate, the separator, and the negative electrode plate of the bare cell 11 in this application are stacked together in sequence to form a prismatic structure. The bare cell includes four edges in the circumferential direction. The four edges extend downward relative to the middle region of the bare cell. In other words, at least the four edges of the bare cell 11 are immersed in the electrolyte solution. During discharging of the battery, the positive electrode plate and the negative electrode plate can draw the electrolyte solution into the gap between the two electrode plates through the four edges.

According to an embodiment of this application, the positive electrode plate, the separator, and the negative electrode plate of the bare cell 11 in this application are stacked together in sequence to form a circular structure. The bare cell includes a circular edge in the circumferential direction. The circular edge extends downward relative to the middle region of the bare cell. In other words, at least the circular edge of the bare cell 11 is immersed in the electrolyte solution. During discharging of the battery, the positive electrode plate and the negative electrode plate can draw the electrolyte solution into the gap between the two electrode plates through the circular edge.

According to an embodiment of this application, the bare cell 11 of this application includes a positive electrode plate, a separator, and a negative electrode plate. The positive electrode plate, the separator, and the negative electrode plate are wound together. Two ends in a direction perpendicular to a winding direction of the bare cell 11 are the two extension ends.

The manufacturing process of the bare cell 11 includes: stacking the positive electrode plate, the separator, and the negative electrode plate first, and then winding the stacked structure clockwise or counterclockwise from one edge of the stacked structure along one direction until reaching an edge opposite to said edge, thereby forming a cylinder; subsequently, sticking the edge onto an outer peripheral wall of the cylinder formed by winding, and then flattening the cylindrical bare cell 11; finally, bending the bare cell to form a structure in which the middle region is higher than the two extension ends. Based on this manufacturing process, the two ends of the bare cell 11 in a direction perpendicular to the winding direction form extension ends. The extension ends are lower than the middle region of the bare cell 11 in the height direction.

During discharging of the battery, the positive electrode plate and the negative electrode plate can draw the electrolyte solution into the gap between the two electrode plates through the two extension ends.

According to an embodiment of this application, referring to FIG. 2, the bare cell 11 of this application assumes an arc-shaped structure. Specifically, the middle region of the bare cell 11 protrudes upward relative to the two opposite extension ends, and the two opposite extension ends are transitioned to the middle region through a smooth curved face.

The arc-shaped bare cell 11 can avoid formation of a stress concentration region inside the bare cell, thereby improving the ability of the bare cell to withstand external forces while ensuring longevity of the bare cell 11.

In this embodiment, the housing 10 of this application assumes a shape that fits the bare cell 11. Specifically, the housing 10 may also assume an arc-shaped structure. Arranged in this way, the housing 10 matches the bare cell 11 in shape, and the bare cell 11 can make full use of the inner cavity space of the housing 10, thereby ensuring structural compactness of the battery cell. More battery cells can be accommodated per unit volume of the battery pack, thereby improving the energy storage capacity of the battery pack.

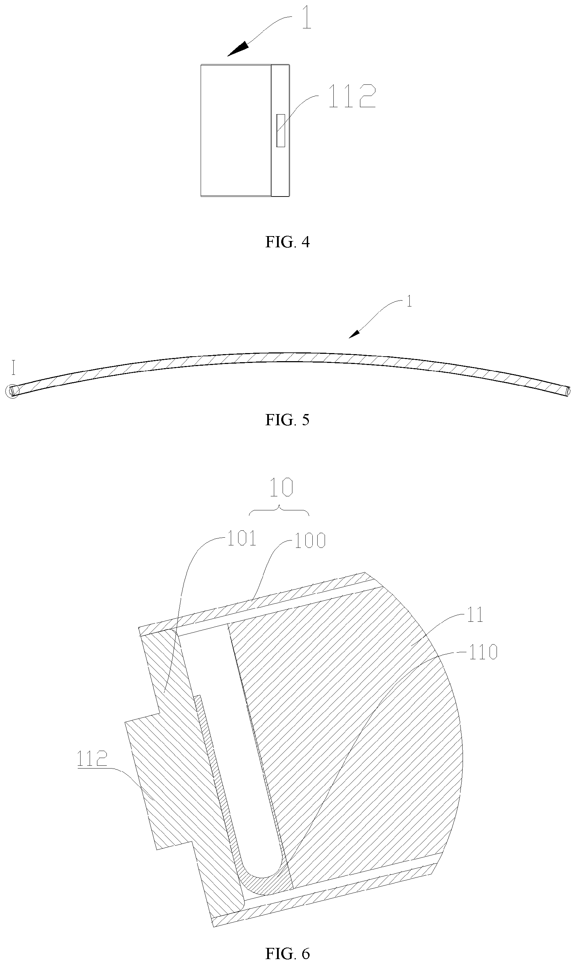

According to an embodiment of this application, referring to FIG. 6, the bare cell 11 of this application further includes a positive tab 110 and a negative tab (not shown in the drawing). The positive tab 110 and the negative tab are located at the two opposite extension ends of the bare cell 11 respectively, so as to be electrically connected to the positive electrode post 112 and the negative electrode post disposed at the two ends of the housing 10 respectively.

The positive tab 110 is configured to electrically connect the positive electrode plate and the positive electrode post 112 on the housing 10. The negative tab is configured to electrically connect the negative electrode plate and the negative electrode post on the housing 10. The positive electrode post 112 and the negative electrode post are configured to be electrically connected to an external circuit to form a current loop. When the positive and negative electrode plates react chemically with the electrolyte solution, a current flows through the current loop.

The parts, coated with an active material, of the positive electrode plate and the negative electrode plate, constitute a body portion of the bare cell 11. The parts, coated with no active material, of the positive electrode plate and the negative electrode plate respectively, constitute a positive tab 110 and a negative tab respectively. Alternatively, the positive tab 110 and the negative tab may be formed independently of the positive electrode plate and the negative electrode plate, and then, by laser welding or other means, the positive tab 110 is electrically connected to the positive electrode plate, and the negative tab is electrically connected to the negative electrode plate.

According to another embodiment of this application, the bare cell 11 of this application further includes a positive tab 110 and a negative tab. The positive tab 110 and the negative tab are located at the same extension end of the bare cell 11, so as to be electrically connected to the positive electrode post 112 and the negative electrode post disposed at one end of the housing 10.

As mentioned earlier above, the positive and negative electrode plates of the bare cell 11 need to react chemically with the electrolyte solution, whereupon a current is generated in the current loop. According to an embodiment of this application, an electrolyte solution is disposed in the housing 10 of this application. At least two opposite extension ends of the bare cell 11 are configured to be always immersed in the electrolyte solution.

The extension ends of the bare cell 11 are always immersed in the electrolyte solution, thereby providing a sufficient amount of electrolyte solution for being drawn into the gap between the electrode plates, and in turn, reducing the probability of lithium plating and ensuring high performance of the battery.

According to another embodiment of this application, at least two bare cells 11, for example, two, three, or more bare cells, are disposed in the housing 10. At least two bare cells 11 are connected in parallel in the housing 10 to increase the energy storage capacity of the entire battery cell.

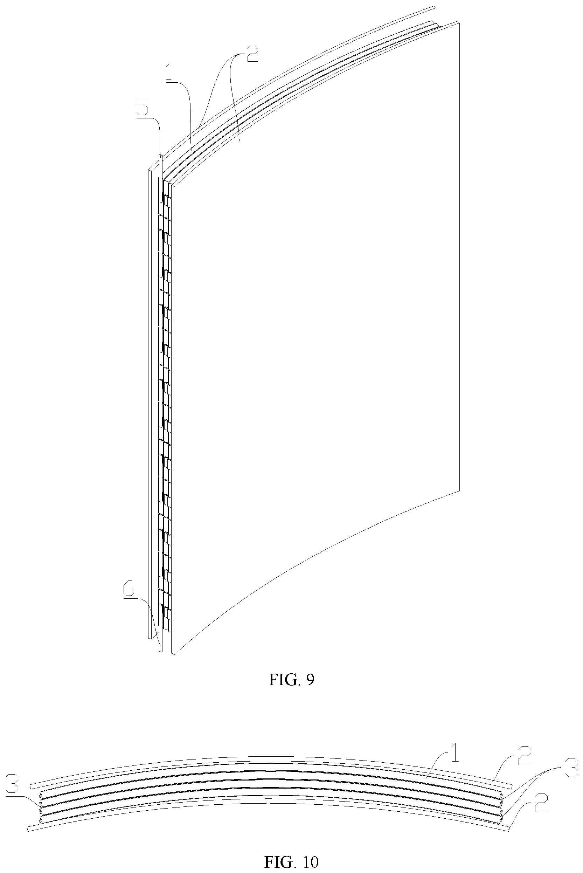

This application further provides a battery pack in addition to the battery. Referring to FIG. 9 to FIG. 15, the battery pack includes two constraint portions 2 that fit shapes of the battery cells 1, and at least two battery cells 1 disclosed in any one of the embodiments described above. The at least two battery cells 1 are stacked together in the height direction and are constrained between the two constraint portions 2.

The constraint portion 2 serves to constrain at least two battery cells 1 to limit the relative movement between the at least two battery cells 1 and prevent the at least two battery cells 1 from arbitrarily moving relative to each other and damaging the electrical connection in between, thereby ensuring the stability and safety of the electrical connection relationship between the at least two battery cells 1.

The battery pack includes at least two battery cells 1 between the two constraint portions 2. The number of battery cells may be set based on the power demand of the electrical device, and at least the minimum power demand can be satisfied.

Each battery cell 1 in the battery pack may be electrically connected to an external circuit separately. For example, the positive electrode post 112 and the negative electrode post of each battery cell are electrically connected to the external circuit separately. Such external circuits are then connected in series and integrated. However, a plurality of external circuits are introduced in such a battery pack structure, and a series integrated circuit needs to be additionally arranged in the external circuits, thereby making the structure much complicated.

To solve the above problem, according to an embodiment of this application, the battery pack of this application includes a first current collecting plate 3. The first current collecting plate 3 is configured to connect the positive electrode post 112 of one of two adjacent battery cells 1 stacked in the height direction to the negative electrode post of the other battery cell 1, so as to connect the two adjacent battery cells 1 in series.

For example, four battery cells 1 stacked in the height direction are denoted as a first battery cell, a second battery cell, a third battery cell, and a fourth battery cell respectively in top-down order. The first battery cell and the second battery cell are connected by a number-one first current collecting plate 3, the second battery cell and the third battery cell are connected by a number-two first current collecting plate 3, and the third battery cell and the fourth battery cell are connected by a number-three first current collecting plate 3.

A plurality of battery cells 1 in the battery pack are connected in series by the first current collecting plates 3. From the battery pack, just a positive lead-out wire 5 and a negative lead-out wire 6 are led out, and then the positive lead-out wire 5 and the negative lead-out wire 6 are electrically connected to an external circuit. The overall structure is compact and simple.

According to an embodiment of this application, referring to FIG. 10, four battery cells 1 are stacked in the battery pack of this application in the height direction.

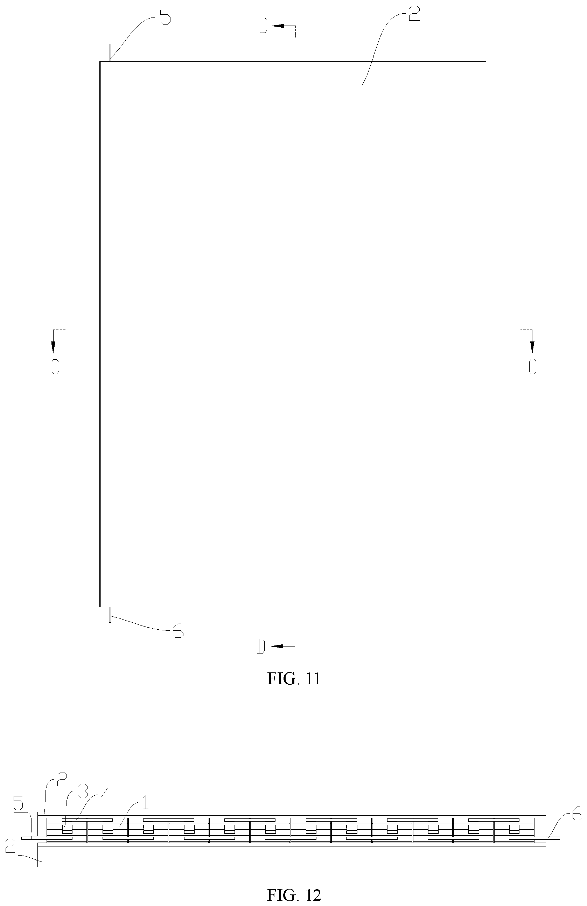

According to an embodiment of this application, referring to FIG. 12 and FIG. 13, the battery pack includes two constraint portions 2 that fit shapes of the battery cells, and at least two battery cells 1 disclosed in any one of the embodiments described above. The at least two battery cells 1 are stacked together in a direction perpendicular to the extension direction of the battery cells 1, and are constrained between the two constraint portions 2.

Referring to FIG. 10, the direction perpendicular to the extension direction of the battery cells 1 means a direction perpendicular to the paper. Such arrangement can make full use of the structure of the constraint portions 2 to arrange more battery cells 1 per unit volume.

Similarly, the battery pack of this application further includes a second current collecting plate 4. The second current collecting plate 4 is configured to connect the positive electrode post 112 of one of two adjacent battery cells 1 stacked in the direction perpendicular to the extension direction of the battery cells 1 to the negative electrode post of the other battery cell 1, so as to connect the two adjacent battery cells 1 in series.

A plurality of battery cells 1 in the battery pack are connected in series by the second current collecting plates 4. From the battery pack, a positive lead-out wire 5 and a negative lead-out wire 6 are led out, and then the positive lead-out wire 5 and the negative lead-out wire 6 are electrically connected to an external circuit. The overall structure is compact and simple.

According to an embodiment of this application, referring to FIG. 10, the battery pack of this application includes two constraint portions 2 that fit shapes of the battery cells 1, and includes the battery cells 1 disclosed in any one of the embodiments described above. A plurality of battery cells 1 are disposed. At least two battery cells 1 are stacked together in a height direction, and at least two battery cells 1 are stacked together in a direction perpendicular to the extension direction of the battery cells 1 and are constrained between the two constraint portions 2.

According to an embodiment of this application, referring to FIG. 11 to FIG. 15, the battery pack of this application includes forty-eight battery cells 1. The forty-eight battery cells 1 are equally divided into twelve groups. Each group includes four battery cells 1. The four battery cells 1 are stacked together in a height direction. The twelve groups are stacked together along a direction perpendicular to the extension direction of the battery cells 1.

According to an embodiment of this application, referring to FIG. 12, the battery pack of this application includes a first current collecting plate 3 and a second current collecting plate 4. The first current collecting plate 1 is configured to connect the positive electrode post 112 of one of two adjacent battery cells 1 stacked in the height direction to the negative electrode post of the other battery cell 1, so as to connect the two adjacent battery cells 1 in series. The second current collecting plate 4 is configured to connect the positive electrode post 112 of one of two adjacent battery cells 1 stacked in the direction perpendicular to the extension direction of the battery cells 1 to the negative electrode post of the other battery cell 1, so as to connect the two adjacent battery cells 1 in series.

For example, four battery cells 1 stacked in the height direction are denoted as a first battery cell, a second battery cell, a third battery cell, and a fourth battery cell respectively in top-down order. The first battery cell and the second battery cell are connected by a number-one first current collecting plate 3, the second battery cell and the third battery cell are connected by a number-two first current collecting plate 3, and the third battery cell and the fourth battery cell are connected by a number-three first current collecting plate 3.

A plurality of battery cells 1 in the battery pack according to this application are connected in series by the first current collecting plate 3 and the second current collecting plate 4, and then a positive lead-out wire 5 and a negative lead-out wire 6 are electrically connected to an external circuit. The overall structure is compact and simple.

According to an embodiment of this application, referring to FIG. 14 and FIG. 15, the battery pack of this application includes two constraint portions 2. The two constraint portions 2 are arc-shaped. The battery pack further includes forty-eight battery cells 1. The forty-eight battery cells 1 are equally divided into twelve cell groups. Each group of battery cells includes four battery cells 1. The four battery cells 1 are stacked together in a height direction. The twelve groups of battery cells are stacked together along a direction perpendicular to the extension direction of the battery cells 1. The forty-eight battery cells 1 are constrained between the two constraint portions 2. The forty-eight battery cells 1 are connected in series by a first current collecting plate 3 and a second current collecting plate 4, and finally a positive lead-out wire 5 and a negative lead-out wire 6 configured to implement electrical connection with an external circuit are led out.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, **characterized in that**:
the battery cell comprises a housing and a bare cell located in an inner cavity of the housing, wherein:
the bare cell comprises at least two opposite extension ends and a middle region located between the two opposite extension ends of the bare cell; and
the two opposite extension ends of the bare cell are configured to be lower than the middle region of the bare cell in a height direction.

2. The battery cell according to claim 1, wherein the bare cell comprises a positive electrode plate, a separator, and a negative electrode plate; the positive electrode plate, the separator, and the negative electrode plate are stacked together in sequence; and an edge position of the bare cell in a circumferential direction is configured to extend downward in the height direction.

3. The battery cell according to claim 1, wherein the bare cell comprises a positive electrode plate, a separator, and a negative electrode plate; the positive electrode plate, the separator, and the negative electrode plate are wound together; and two ends in a direction perpendicular to a winding direction of the bare cell are the two extension ends.

4. The battery cell according to any one of claims 1 to 3, wherein the bare cell assumes an arc-shaped structure, and the housing assumes a shape that fits the bare cell.

5. The battery cell according to any one of claims 1 to 4, wherein at least two bare cells are disposed, and the at least two bare cells are connected in parallel in the housing.

6. The battery cell according to any one of claims 1 to 5, wherein the bare cell further comprises a positive tab and a negative tab, and the positive tab and the negative tab are located at the two opposite extension ends of the bare cell respectively or located at a same extension end of the bare cell.

7. The battery cell according to any one of claims 1 to 6, wherein an electrolyte solution is disposed in the housing, and at least two opposite extension ends of the bare cell are configured to be always immersed in the electrolyte solution.

8. The battery cell according to any one of claims 2 to 6, wherein the positive electrode plate, the separator, and the negative electrode plate of the bare cell are stacked together in sequence to form a prismatic structure, the bare cell comprises four edges in the circumferential direction, the four edges extend downward relative to the middle region of the bare cell, and at least the four edges of the bare cell are immersed in an electrolyte solution.

9. The battery cell according to any one of claims 2 to 6, wherein the positive electrode plate, the separator, and the negative electrode plate of the bare cell are stacked together in sequence to form a circular structure, the bare cell comprises a circular edge in the circumferential direction, the circular edge extends downward relative to the middle region of the bare cell, and at least the circular edge of the bare cell is immersed in an electrolyte solution.

10. The battery cell according to any one of claims 1 to 9, wherein the housing 10 comprises a housing body and an end cap, and the end cap fits and covers an opening of the housing body to isolate an internal environment of the battery cell from components in an external environment.

11. The battery cell according to claim 10, wherein a pressure relief mechanism is further disposed on the end cap and configured to release an internal pressure when the internal pressure or an internal temperature of the battery cell reaches a threshold.

12. A battery pack, comprising at least two battery cells according to any one of claims 1 to 10 and two constraint portions that fit shapes of the battery cells, wherein the at least two battery cells are stacked together in the height direction and are constrained between the two constraint portions.

13. The battery pack according to claim 12, wherein, among the at least two battery cells stacked in the height direction, a positive electrode post of one of two adjacent battery cells is connected to a negative electrode post of the other battery cell by a first current collecting plate, so as to connect the two adjacent battery cells in series.

14. A battery pack, comprising at least two battery cells according to any one of claims 1 to 10 and two constraint portions that fit shapes of the battery cells, wherein the at least two battery cells are stacked together in a direction perpendicular to an extension direction of the battery cells, and are constrained between the two constraint portions.

15. The battery pack according to claim 14, wherein, among the at least two battery cells stacked in the direction perpendicular to the extension direction of the battery cells, a positive electrode post of one of two adjacent battery cells is connected to a negative electrode post of the other battery cell by a second current collecting plate, so as to connect the two adjacent battery cells in series.

16. A battery pack, comprising a plurality of battery cells according to any one of claims 1 to 10 and two constraint portions that fit shapes of the battery cells, wherein at least two battery cells are stacked together in a direction perpendicular to an extension direction of the battery cells, at least two battery cells are stacked together in the height direction, and the plurality of battery cells are constrained between the two constraint portions.

17. The battery pack according to claim 16, wherein:
among the at least two battery cells stacked in the height direction, a positive electrode post of one of two adjacent battery cells is connected to a negative electrode post of the other battery cell by a first current collecting plate, so as to connect the two adjacent battery cells in series; and
among the at least two battery cells stacked in the direction perpendicular to the extension direction of the battery cells, a positive electrode post of one of two adjacent battery cells is connected to a negative electrode post of the other battery cell by a second current collecting plate, so as to connect the two adjacent battery cells in series.
